# EUROPÄISCHE PATENTSCHRIFT

(11) **EP 0 811 920 B1**
(45) Veröffentlichungstag und Bekanntmachung des Hinweises auf die Patenterteilung: **25.09.2002**
(21) Anmeldenummer: 97103180.2
(22) Anmeldetag: 27.02.1997
(51) Int. Cl.: G06F 11/27, B60T 8/00, G05B 1/00, G06F 11/22, B60T 8/88

(54) **Selbstüberprüfung einer Funktionsgruppe in einem Kraftfahrzeug**
Self test of a device located in a motor vehicle
Autotest de dispositif dans des véhicules à moteur

(30) Priorität: 07.05.1996 DE 19618161
(43) Veröffentlichungstag der Anmeldung: 10.12.1997
(73) Patentinhaber: DaimlerChrysler AG, 70567 Stuttgart (DE)
(72) Erfinder: Fischer, Jörg, 73728 Esslingen (DE)

(56) Entgegenhaltungen:
- EP-A- 0 423 421
- DE-C- 4 338 064
- "RESOLUTION OF MISSING HARDWARE OPTIONS" IBM TECHNICAL DISCLOSURE BULLETIN, Bd. 31, Nr. 12, 1. Mai 1989, Seiten 361-363, XP000120789

## Beschreibung

Die Erfindung betrifft ein Verfahren zur Selbstüberprüfung einer Funktionsgruppe in einem Kraftfahrzeug gemäß dem Oberbegriff des Patentanspruchs 1 und ein Steuergerät zur Durchführung des Verfahrens.

Um die Variantenvielfalt an Steuergeräten für eine bestimmte Funktionsgruppe gering zu halten, wird im Fahrzeugbau zunehmend dazu übergegangen, ein alle Varianten umfassendes Steuergerät einzubauen und dieses am Ende der Montage durch ein einmaliges Parametrierungsverfahren auf die gewünschte Variante zu individualisieren. Dies kann durch Eingabe eines entsprechenden Datensatzes oder mittels manuell einzustellender Kodierschalter erfolgen. Eine solche Parametrierung besteht insbesondere darin, dem Steuergerät mitzuteilen, ob die Funktionsgruppe mit einem bestimmten Stellglied ausgestattet ist oder nicht. Für den Fall eines elektropneumatischen Bremssystems als Funktionsgruppe kann ein solches optionales Stellglied ein bestimmtes Magnetventil sein. Üblicherweise wird in Abhängigkeit des logischen Wertes eines Ausstattungsbits eine bedarfsweise Ansteuerung des entsprechenden Stellgliedes ermöglicht oder unterdrückt. Insbesondere wird in dem Steuergerät die entsprechende Endstufe, welche zur Ansteuerung des optionalen Stellgliedes vorgesehen ist, aktiviert oder deaktiviert, abhängig davon, ob das Ausstattungsbit einen logischen Wert annimmt, der das Vorhandensein bzw. das Nichtvorhandensein des Stellgliedes anzeigt. Die Abschaltung der Endstufe bei den Ausstattungsvarianten, wo sie nicht benötigt wird, spart Strom und erhöht die Sicherheit, indem die Kurzschlußgefahr vermindert wird.

Mit der Einbeziehung von Varianten durch Parametrierung am Ende der Montage ergeben sich zusätzliche Fehlerquellen. Parametrierungsfehler bleiben oft unerkannt, da in der Regel eine nachfolgende Überprüfung der Parametrierung nicht vorgesehen ist und sie deshalb nur an einer Fehlfunktion der Funktionsgruppe erkennbar sind. Die falsche Parametrierung eines Steuergerätes kann insbesondere bei sicherheitsrelevanten Funktionsgruppen schwerwiegende Folgen nach sich ziehen, beispielsweise wenn ein Stellglied, z.B. ein Magnetventil einer elektropneumatischen Bremsanlage nicht aktiviert wird, weil dies gemäß einer falsch eingestellten Parametrierung als nicht vorhanden gilt.

Es sind Verfahren zur Selbstüberprüfung von Funktionsgruppen bekannt, bei denen der Ausgang eines Steuergerätes, welcher der Ansteuerung eines Stellgliedes dient, mittels einer Endstufen-Überwachungsschaltung auf Unterbrechung der Ansteuerungsleitung zwischen Steuergerät und Stellglied überwacht wird. Daneben ist auch eine Überwachung auf Kurzschluß nach Versorgungsspannung oder Masse möglich. Beispielsweise ist aus der DE 43 38 064 C1 ein Steuergerät für eine elektropneumatische Bremsanlage bekannt, bei dem während einer Bremsbetätigung überprüft wird, ob der Strom durch ein Magnetventil innerhalb vorgegebener Grenzwerte liegt.

Mit den bekannten Verfahren zur Selbstüberprüfung einer Funktionsgruppe wird die Möglichkeit einer variantenabhängigen Parametrierung gar nicht oder allenfalls in der Weise einbezogen, daß wenn ein Stellglied aufgrund der Parametrierung als nicht vorhanden gilt, mit der entsprechenden Endstufe auch die zugehörige Endstufen-Überwachungsschaltung deaktiviert wird.

Aufgabe der Erfindung ist es, ein Verfahren zur Selbstprüfung einer Funktionsgruppe bereitzustellen, bei der die Möglichkeit einer variantenabhängigen Parametrierung des Steuergerätes in einer Weise einbezogen wird, daß zumindest in bestimmten Fällen auch eine fehlerhafte Parametrierung erkannt werden kann. Ebenso ist es Aufgabe der Erfindung ein Steuergerät bereitzustellen, welches zur Durchführung des Verfahrens geeignet ist.

Diese Aufgabe wird hinsichtlich des Verfahrens durch die Merkmale des Anspruchs 1 gelöst und hinsichtlich des Steuergerätes durch die Merkmale des Anspruchs 7 gelöst, wobei die Merkmale der Unteransprüche vorteilhafte Aus- und Weiterbildungen kennzeichnen.

Bei dem erfindungsgemäßen Verfahren wird gegenüber dem Stand der Technik der Ausgang des Steuergerätes, welcher zur Ansteuerung des optionalen Stellgliedes dient, permanent auf Unterbrechung überwacht und die Ausgabe einer Fehlermeldung von dem Ergebnis einer logischen Verknüpfung der Werte des Ausstattungsbits und des Unterbrechungsbits abhängig gemacht.

Vorteile der Erfindung gegenüber dem Stand der Technik bestehen darin, daß die laufende Überwachung des Ausgangs des Steuergerätes die Möglichkeit bietet, auch in den Fällen, wo gemäß der Parametrierung ein Stellglied als nicht vorhanden gilt, ein angeschlossenes Stellglied zu erkennen. Die entsprechende Information bezüglich des Unterbrechungsstatus kann genutzt werden, um mittels der logischen Verknüpfung mit dem Wert des Ausstattungsbits eine falsche Parametrierung zu erkennen.

Weitere Einzelheiten und vorteilhafte Weiterbildungen des erfindungsgemäßen Verfahrens ergeben sich aus den Unteransprüchen in Verbindung mit der folgenden Beschreibung.
Das erfindungsgemäßen Verfahren wird anhand des Steuergerätes zur Durchführung des Verfahrens erläutert.

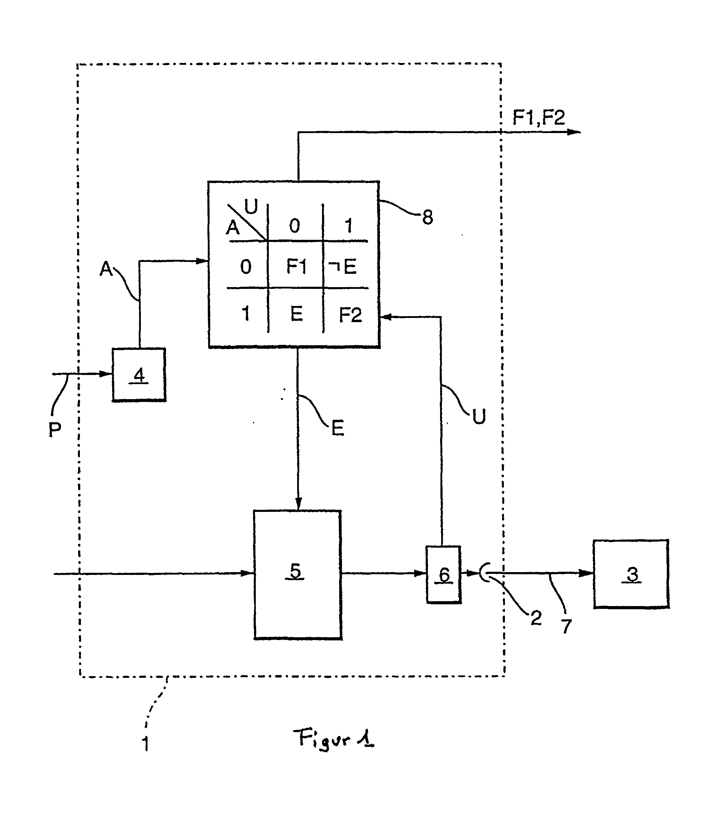

Die einzige Figur 1 zeigt eine Funktionsgruppe umfassend das erfindungsgemäße Steuergerät 1 und ein an einem Ausgang 2 des Steuergerätes 1 anschließbares Stellglied 3, welches variantenabhängig vorhanden oder nicht vorhanden ist. Das Steuergerät 1 wird mittels eines in einen Speicher 4 nichtflüchtig eingetragenen Ausstattungsbits A auf die Ausstattung der vorliegende Variante eingestellt. Das Ausstattungsbit A wird durch Übertragung eines Parametrierungsdatensatzes P von außen gesetzt. Der Wert A=1 entspricht einer Ausstattung mit Stellglied 3, der Wert A=0 einer Ausstattung ohne Stellglied.

Ein vorhandenes Stellglied 3 wird in Abhängigkeit von Eingangssignalen des Steuergerätes 1 von einer Endstufe 5 über eine an den Ausgang 2 angeschlossene Ansteuerungsleitung 7 angesteuert. Eine Überwachungsschaltung 6 überwacht den Ausgang 2 zumindest auf Unterbrechung in der Ansteuerungsleitung 7. Wenn eine Unterbrechung vorliegt oder keine Ansteuerungsleitung angeschlossen ist, wird ein Unterbrechungsbit U=1 gesetzt. Wenn keine Unterbrechung erkannt wird und ein ordnungsgemäßer Zustand mit angeschlossenem Stellglied 3 erkannt wird, wird das Unterbrechungsbit U=0 gesetzt.

In einer Auswertelogik 8 werden die Werte des Ausstattungsbits A und des Unterbrechungsbits U gemäß einer logischen Tabelle miteinander verknüpft, die im folgenden beschrieben wird.

Wenn das Unterbrechungsbit keine Unterbrechung anzeigt (U=0) und zugleich das Ausstattungsbit das Nichtvorhandensein eines Stellgliedes anzeigt (A=0), wird eine Fehlermeldung F1 ausgegeben, die auf eine fehlerhafte Setzung des Ausstattungsbits A hinweist. In vorteilhafter Weise wird hier gegenüber dem Stand der Technik erreicht, daß eine fehlerhafte Parametrierung erkannt wird, sofern unrichtigerweise ein Stellglied 3 als nicht vorhanden erklärt wurde.

Wenn das Unterbrechungsbit eine Unterbrechung anzeigt (U=1) und zugleich das Ausstattungsbit das Vorhandensein eines Stellgliedes anzeigt (A=1), wird eine Fehlermeldung F2 ausgegeben, die auf eine Unterbrechung in der Ansteuerungsleitung hinweist. In vorteilhafter Weise wird hier gegenüber dem Stand der Technik verhindert, daß eine Unterbrechung in der Ansteuerungsleitung gemeldet wird, wenn tatsächlich ein ordnungsgemäßer Zustand einer Ausstattungsvariante ohne Stellglied vorliegt.

Wenn das Unterbrechungsbit keine Unterbrechung anzeigt (U=0) und zugleich das Ausstattungsbit das Vorhandensein eines Stellgliedes anzeigt (A=1), wird ein ordnungsgemäßer Zustand einer Variante mit eingebautem Stellglied 3 erkannt. In einer vorteilhaften Weiterbildung kann vorgesehen sein, daß die Endstufe 5 durch ein entsprechendes Endstufenbit E aktiviert wird (E=1), so daß eine Ansteuerung des Stellgliedes 3 ermöglicht ist.

Wenn das Unterbrechungsbit eine Unterbrechung anzeigt (U=1) und zugleich das Ausstattungsbit das Nichtvorhandensein eines Stellgliedes anzeigt (U=0), wird ein ordnungsgemäßer Zustand einer Variante ohne Stellglied erkannt. In der im vorangehenden Absatz dargelegten vorteilhaften Weiterbildung kann für diesen Fall vorgesehen sein, daß die Endstufe 5 deaktiviert wird (E=0), z.B. durch Abschaltung, so daß jede Ansteuerung des Ausgangs 2 unterdrückt und der Ausgang 2 spannungsfrei ist. Die Überwachungsschaltung 6 ist von diesem Vorgang unbeeinflußt, sie überwacht den Ausgang 2 permanent, unabhängig vom logischen Wert des Ausstattungsbits A. In vorteilhafter Weise wird hier gegenüber dem Stand der Technik die Bedingung, welche zur Deaktivierung der Endstufe 5 und damit auch des Stellgliedes 3 führt, - nämlich das Nichtvorhandensein des Stellgliedes, angezeigt durch das Ausstattungsbit mit dem Wert A=0 - auf Plausibilität überprüft.

Das erfindungsgemäße Verfahren ist auf jede Funktionsgruppe im Fahrzeug anwendbar, bei der eine variantenabhängige Anzahl von Stellgliedern durch ein zentrales Steuergerät angesteuert werden, welches auf die jeweils vorliegende Ausstattungsvariante parametrierbar ist. Auch wenn das Verfahren nur für ein einziges optionales Stellglied beschrieben wurde, ist es ohne weiteres auf den Fall mehrerer optionaler Stellglieder übertragbar.

Das erfindungsgemäße Verfahren empfiehlt sich insbesondere bei sicherheitskritischen Anwendungen, wie einem elektropnematischen Bremssystem mit optionalen Magnetventilen: Mit dem Ausstattungsbit kann beispielsweise bei Nutzfahrzeugen festgelegt werden, ob ein Anhänger-Magnetventil zur Ansteuerung einer Anhängerbremsanlage, mit dem bedarfsweise ein Anhängerbremsdruck ausgesteuert wird, im vorliegenden Zugfahrzeug verbaut ist.

Eine weitere Anwendung betrifft ABS-Bremsanlagen für Autobusse, die je nach Ausstattung 4- bzw. 6-kanalig ausgelegt sein können.

Ein weiteres Beispiel für eine sicherheitskritische Funktionsgruppe sind Airbag-Auslösegeräte, die neben einem Fahrerairbag je nach Variante auch weitere Rückhaltesysteme wie Beifahrerairbag, Seitenairbag, Gurtstraffer, Überrollbügel usw., die hier funktionell als "Stellglieder" aufzufassen sind, ansteuern.

## Patentansprüche

1. Verfahren zur Selbstüberprüfung einer Funktionsgruppe in einem Kraftfahrzeug, wobei die Funktionsgruppe zumindest ein Steuergerät sowie variantenabhängig zusätzlich ein von dem Steuergerät anzusteuerndes Stellglied umfaßt und das Steuergerät mittels eines Ausstattungsbits auf die jeweils vorliegende Ausstattungsvariante eingestellt wurde,
**dadurch gekennzeichnet,**
- **daß** unabhängig von dem Wert des Ausstattungsbits (A) der Ausgang (2) des Steuergerätes (1), welcher zur Ansteuerung des Stellgliedes (3) dient, permanent auf eine Unterbrechung in der Ansteuerungsleitung (7) zwischen Steuergerät (1) und Stellglied (3) hin überwacht und einem Unterbrechungsbit (U) ein entsprechender Wert zugewiesen wird, und
- **daß** in Abhängigkeit von dem Ergebnis der logischen Verknüpfung der Werte des Unterbrechungsbits (U) und des Ausstattungsbits (A) eine Fehlermeldung (F1, F2) ausgegeben wird.

2. Verfahren nach Anspruch 1,
**dadurch gekennzeichnet,**
**daß** wenn das Unterbrechungsbit (U) keine Unterbrechung anzeigt und zugleich das Ausstattungsbit (A) das Nichtvorhandensein eines Stellgliedes anzeigt, eine Fehlermeldung (F1) ausgegeben wird, die auf eine fehlerhafte Setzung des Ausstattungsbits (A) hinweist.

3. Verfahren nach Anspruch 1,
**dadurch gekennzeichnet,**
**daß** wenn das Unterbrechungsbit (U) eine Unterbrechung anzeigt und zugleich das Ausstattungsbit (A) das Vorhandensein eines Stellgliedes anzeigt, eine Fehlermeldung (F2) ausgegeben wird, die auf eine Unterbrechung der Ansteuerungsleitung (7) hinweist.

4. Verfahren nach Anspruch 1,
**dadurch gekennzeichnet,**
**daß** wenn das Unterbrechungsbit (U) keine Unterbrechung anzeigt und zugleich das Ausstattungsbit (A) das Vorhandensein eines Stellgliedes (3) anzeigt, ein ordnungsgemäßer Zustand einer Variante mit eingebautem Stellglied erkannt wird.

5. Verfahren nach Anspruch 1,
**dadurch gekennzeichnet,**
**daß** wenn das Unterbrechungsbit (U) eine Unterbrechung anzeigt und zugleich das Ausstattungsbit (A) das Nichtvorhandensein eines Stellgliedes anzeigt, ein ordnungsgemäßer Zustand einer Variante ohne Stellglied erkannt wird.

6. Verfahren nach Anspruch 4 und 5,
**dadurch gekennzeichnet,**
**daß** wenn ein ordnungsgemäßer Zustand einer Variante mit Stellglied erkannt wird, eine bedarfsweise Ansteuerung des Stellgliedes (3) ermöglicht wird, und wenn ein ordnungsgemäßer Zustand einer Variante ohne Stellglied erkannt wird, eine bedarfsweise Ansteuerung des Ausgangs (2) unterdrückt wird, insbesondere durch Abschaltung einer im Steuergerät (1) vorhandenen Endstufe (5), welche zur Ansteuerung des Stellgliedes dient.

7. Steuergerät zur Durchführung des Verfahrens nach Anspruch 1 umfassend einen nichtflüchtigen Speicher in welchen ein Ausstattungsbit eintragbar ist,
**dadurch gekennzeichnet,**
**daß** das Steuergerät (1) zusätzlich umfaßt:
- eine Überwachungsschaltung (6) zur permanenten Überwachung des Ausgangs (2), an den das Stellglied (3) anschließbar ist, und Zuweisung eines logischen Wertes an ein Unterbrechungsbit (U),
- eine Auswertelogik (8), welche von der Überwachungsschaltung (6) mit dem Unterbrechungsbit (U) und von dem Speicher (4) mit dem Ausstattungsbit (A) ansteuerbar ist und welche diese Eingangswerte (U, A) mittels einer logischen Tabelle verküpft und gegebenenfalls eine Fehlermeldung ausgibt.

8. Steuergerät nach Anspruch 7 zur Durchführung des Verfahrens nach Anspruch 6,
**dadurch gekennzeichnet,**
**daß** das Steuergerät (1) eine Endstufe (5) aufweist, welche zur Ansteuerung des Stellgliedes (3) dient und welche von der Auswertelogik (8) mit einem Endstufenbit (E) ansteuerbar ist, durch das die Endstufe (5) aktivierbar bzw. deaktivierbar ist.

## Claims

1. A process for self-testing a functional group in a motor vehicle, the functional group comprising at least one control device and in addition a control element to be actuated by the control device depending on the variant, and the control device having been set to the relevant equipment variant by means of an equipment bit,
**characterised in that**
- independently of the value of the equipment bit (A), the output (2) of the control device (1) which serves to actuate the control element (3), is constantly supervised for any interruption in the actuation line (7) between control device (1) and control element (3) and a corresponding value is assigned to an interruption bit (U), and
- an error message (F1, F2) is emitted dependent on the result of the logic operation linking involving the values of the interruption bit (U) and the equipment bit (A).

2. A process in accordance with claim 1,
**characterised in that**
if the interruption bit (U) indicates no interruption and at the same time the equipment bit (A) indicates the absence of a control element, an error message (F1) indicating the erroneous setting of the equipment bit (A) is emitted.

3. A process in accordance with claim 1,
**characterised in that**
if the interruption bit (U) indicates an interruption and at the same time the equipment bit (A) indicates the presence of a control element, an error message (F2) indicating an interruption in the actuation line (7) is emitted.

4. A process in accordance with claim 1,
**characterised in that**
if the interruption bit (U) indicates no interruption and at the same time the equipment bit (A) indicates the presence of a control element (3), normal status of a variant with an integrated control element is recognised.

5. A process in accordance with claim 1,
**characterised in that**
if the interruption bit (U) indicates an interruption and at the same time the equipment bit (A) indicates the absence of a control element, normal status of a variant without a control element is recognised.

6. A process in accordance with claims 4 and 5,
**characterised in that**
when normal status of a variant with a control element is recognised, actuation of the control element (3) as required is enabled, and when normal status of a variant without a control element is recognised, actuation of the output (2) as required is suppressed, in particular by switching off an end stage (5) present in the control device (1) which serves to actuate the control element.

7. A control device to carry out the process in accordance with claim 1 comprising a non-volatile storage device into which an equipment bit can be entered,
**characterised in that** the control device (1) also comprises:
- a supervision circuit (6) for the constant supervision of the output (2) to which the control element (3) can be connected, and allocation of a logical value to an interruption bit (U),
- an evaluation logic circuit (8) which can be actuated by the supervision circuit (6) with the interruption bit (U) and by the storage device (4) with the equipment bit (A), which links these input values (U, A) by means of a logical table and which where necessary emits an error message.

8. A control device in accordance with claim 7 to carry out the process in accordance with claim 6,
**characterised in that**
the control device (1) has an end stage (5) which serves to actuate the control element (3) and which can be actuated by the evaluation logic circuit (8) with an end stage bit (E) by means of which the end stage (5) can be activated and deactivated.

## Revendications

1. Procédé d'autotest d'un groupe fonctionnel dans un véhicule motorisé, dans lequel le groupe fonctionnel comporte au moins un appareil de commande ainsi qu'en outre, en fonction de la variante, un élément réglant à commander par l'appareil de commande et dans lequel l'appareil de commande a, au moyen d'un bit de l'équipement de l'appareil, été mis en correspondance avec la variante d'équipement de l'appareil respectivement présente, **caractérisé par le fait**
- **que** quelle que soit la valeur du bit de l'équipement de l'appareil (A), le signal de sortie (2) de l'appareil de commande (1), qui sert à commander l'élément réglant (3), surveille en permanence l'apparition d'une coupure sur le conducteur de la variante d'équipement de l'appareil (7) entre appareil de commande (1) et élément réglant (3) et qu'une valeur appropriée est attribuée à un bit de coupure (U) et
- **qu'**en fonction du résultat de la liaison logique des valeurs du bit de coupure (U) et du bit de matériel d'équipement (A), l'annonce d'un défaut (F1, F2) est émise.

2. Procédé selon la revendication 1, **caractérisé par le fait que** si le bit de coupure (U) n'indique aucune coupure et qu'en même temps le bit de l'équipement de l'appareil (A) indique la non présence d'un élément réglant, est émise une annonce de défaut (F1) qui attire l'attention sur une validation défectueuse du bit de l'équipement de l'appareil (A).

3. Procédé selon la revendication 1, **caractérisé par le fait que** si le bit de coupure (U) indique une coupure et qu'en même temps le bit de l'équipement de l'appareil (A) indique la présence d'un élément réglant, est émise une annonce de défaut (F2) qui attire l'attention sur une coupure du conducteur de la variante d'équipement de l'appareil (7).

4. Procédé selon la revendication 1, **caractérisé par le fait que** si le bit de coupure (U) n'indique aucune coupure et qu'en même temps le bit de l'équipement de l'appareil (A) indique l'existence d'un élément réglant (3), c'est un état régulier d'une variante d'équipement de l'appareil avec élément réglant incorporé qui est reconnu.

5. Procédé selon la revendication 1, **caractérisé par le fait que** si le bit de coupure (U) indique une coupure et qu'en même temps le bit de l'équipement de l'appareil (A) indique la non présence d'un élément réglant, c'est un état régulier d'une variante d'équipement de l'appareil sans élément réglant qui est reconnu.

6. Procédé selon les revendications 4 et 5, **caracterisé par le fait que** si c'est un état régulier d'une variante d'équipement de l'appareil avec élément réglant qui est reconnu, une commande, nécessaire, de l'élément réglant (3) est permise et que si c'est un état régulier d'une variante d'équipement de l'appareil sans élément réglant qui est reconnu, une commande, nécessaire, du signal de sortie (2) est empêchée, en particulier par mise hors circuit d'un étage final (5) qui existe dans l'appareil de commande (1) et sert à commander l'élément réglant.

7. Appareil de commande pour la mise en oeuvre du procédé de la revendication 1, comportant une mémoire non volatile dans laquelle peut être inscrit un bit de l'équipement de l'appareil, **caractérisé par le fait que** l'appareil de commande (1) comporte en outre :
- un circuit de surveillance (6) pour la surveillance permanente de la sortie (2) à laquelle l'élément réglant (3) peut être relié et attribution d'une valeur logique à un bit de coupure (U),
- un circuit logique de traitement (8) qui peut être commandé par le circuit de surveillance (6) avec le bit de coupure (U) et par la mémoire (4) avec le bit de matériel d'équipement (A) et qui relie logiquement ces valeurs d'entrée (U, A) au moyen d'une table logique et émet éventuellement une annonce de défaut.

8. Appareil de commande selon la revendication 7 pour la mise en oeuvre du procédé selon la revendication 6, **caractérisé par le fait que** l'appareil de commande (1) présente un étage final (5) qui sert à commander l'élément réglant (3) et peut être commandé par le circuit logique de traitement (8) avec un bit d'étage final (E) au moyen duquel l'étage final (5) peut être activé ou désactivé.
